**Europäisches Patentamt**

**European Patent Office**

**Office européen des brevets**

(19)

(11) Veröffentlichungsnummer: **0 149 086**
**A2**

(12) # EUROPÄISCHE PATENTANMELDUNG

(21) Anmeldenummer: **84114588.1**

(22) Anmeldetag: **30.11.84**

(51) Int. Cl.⁴: **H 01 H 13/70**
**G 06 F 3/023**

(30) Priorität: **30.11.83 DE 8334346 U**

(43) Veröffentlichungstag der Anmeldung:
**24.07.85 Patentblatt 85/30**

(84) Benannte Vertragsstaaten:
**IT**

(71) Anmelder: **Müller, Rolf, Dr.**
**Friedensstrasse 68**
**D-6750 Kaiserslautern(DE)**

(72) Erfinder: **Müller, Rolf, Dr.**
**Friedensstrasse 68**
**D-6750 Kaiserslautern(DE)**

(74) Vertreter: **Fischer, Wolf-Dieter, Dipl.-Ing.**
**Patentanwälte Dipl.-Ing. A.H. Fischer Dipl.-Ing. W.D.**
**Fischer Kurfürstenstrasse 32**
**D-6700 Ludwigshafen/Rhein(DE)**

(54) **Vorrichtung, insbesondere für Schreibmaschinen und Terminals.**

(57) Gegenstand der Erfindung ist eine Vorrichtung für Schreibmaschinen und Terminals mit einem Tastenfeld, wobei jede Taste mit wenigstens zwei, wahlweise vorwählbaren Zeichen belegt ist und jeder Taste ein ansteuerbares Anzeigeelement 14 zugeordnet ist, das sich nahe der zugehörigen Taste befindet oder in diese integriert ist. Zum Ansteuern der Anzeigeelemente 14 in Form von Flüssigkristall (LCD) einer Taste ist eine dezentrale Steuerung vorgesehen, bei der jedes Anzeigeelement 14 mit einem Steuerelement in Form eines Treibers versehen ist. Der Treiber 22 wird zur Darstellung des anzuzeigenden Symbols im Anzeigeelement 14 nur einmal mit der Information versehen und arbeitet selbständig weiter.

FIG. 6

Vorrichtung, insbesondere für Schreibmaschinen
und Terminals

Die Erfindung betrifft eine Vorrichtung, insbesondere für Schreibmaschinen und Terminals mit einem Tastenfeld, wobei jede Taste
mit wenigstens zwei, wahlweise vorwählbaren Zeichen belegt ist und
jeder Taste ein ansteuerbares Anzeigeelement zugeordnet ist, das
sich nahe der zugehörigen Taste befindet oder in diese integriert
ist.

Derartige Vorrichtungen dienen zur Eingabe einer Vielzahl von
Zeichen, welche insbesondere in Form von Buchstaben, Ziffern
oder mathematischen oder sonstigen Sonderzeichen auftreten, in
die zugeordneten Geräte wie Schreibmaschinen, Computer, Rechner
oder dergleichen. Bisher ist es üblich gewesen, eine Taste mit
mehreren Zeichen zu belegen und gleichzeitig mit mehreren Zeichen
zu beschriften. Die Anzahl der Zeichen, mit der man eine Taste
lesbar beschriften kann, ist ersichtlich begrenzt und ferner erlaubt die vorgegebene Beschriftung keinen einfachen und schnellen
Ersatz durch andere Zeichensätze. Es bedarf keiner besonderen Erwähnung, daß vor allem im Bereich der Naturwissenschaften mit
ihren zahlreichen Sonderzeichen ein häufiger Wechsel zwischen
dem üblichen Alphabet und Sonderzeichen sehr nachteilig ist, zumal
hierbei sehr leicht Eingabefehler auftreten können.

Der Erfindung liegt daher die Aufgabe zugrunde, die Vorrichtung
der eingangs genannten Art dahingehend zu verbessern, daß eine
einfache Darstellung der jeweils gewünschten Zeichen in guter
Qualität ermöglicht wird. Es soll ferner eine gute Übersichtlichkeit und Lesbarkeit gewährleistet sein, wobei ferner auch eine einfache und kostengünstige Anpassung an die jeweiligen Anforderungen
ermöglicht werden soll. Schließlich soll die Vorrichtung die Verarbeitung zahlreicher Zeichen bzw. Zeichensätze durch eine begrenzte Anzahl von Tasten vereinfachen.

Zur Lösung dieser Aufgabe wird vorgeschlagen, daß zum Ansteuern der Anzeigeelemente in Form von Flüssigkristall (LCD) einer Taste eine dezentrale Steuerung vorgesehen ist, bei der jedes Anzeigeelement mit einem Steuerelement in Form eines Treibers versehen ist. Der Treiber wird zur Darstellung des anzuzeigenden Symbols im Anzeigeelement nur einmal mit der Information versehen und arbeitet selbständig weiter. Es wird durch das Anzeigeelement nur das jeweils vorgewählte Zeichen wiedergegeben, wobei eine einwandfreie Lesbarkeit und Zuordnung des jeweils vorgewählten Zeichens bzw. Zeichensatzes sichergestellt ist. Die Anzeige gewährleistet eine unmittelbare Zuordnung des jeweils vorgewählten Zeichens zu der betreffenden Taste. Eine Taste kann somit mit wesentlich mehr Zeichen belegt werden, ohne daß hierfür zusätzliche Hilfsmittel, beispielsweise Vergleichstabellen zwischen Sonderzeichen und Beschriftung, erforderlich sind. Da jeweils nur ein Zeichen mit der Anzeige dargestellt wird, ist eine gute Lesbarkeit sichergestellt. Aufgrund der eindeutigen Zuordnung des jeweils angezeigten Zeichens zu der Taste ist eine fehlerhafte Bedienung praktisch ausgeschlossen. Besondere Vorteile ergeben sich auch und gerade bei heutigen Matrix- und Laserdruckern, die eine einfache Darstellung beliebiger Zeichen in guter Qualität ermöglichen. Mit der erfindungsgemäßen Vorrichtung, die eine nicht unwesentliche Verbesserung der Eingabemöglichkeiten ergibt, können nunmehr auch diese drucktechnischen Möglichkeiten voll ausgeschöpft werden. Zur Ansteuerung der Anzeigeelemente wird eine Steuerelektronik vorgesehen, welche den jeweiligen Anforderungen entsprechend ausgelegt ist.

Es ist ersichtlich, daß durch Wechsel des Datensatzes gegen
einen anderen, welcher eine andere Zeichenbelegung beinhaltet, in einfacher Weise auch die Eingabemöglichkeiten der
Vorrichtung verändert werden können. Es braucht also nicht
mehr die gesamte Vorrichtung gegebenenfalls ausgetauscht zu
werden, sondern nur noch die Informationen elektronisch
übertragen werden.

Hierdurch ergeben sich nicht unwesentliche
Fertigungsvorteile, da Tasten, Anzeigen und sonstiger mechanisch-konstruktiver Aufbau der Vorrichtungen übereinstimmend
sein kann, während die Anpassung an die jeweiligen Anforderungen und Eingabebedingungen im wesentlichen durch die erfindungsgemäße Ansteuerelektronik vorgenommen wird. Ferner
sei auf die besonderen Vorteile der Vorrichtung in Verbindung
mit einem Matrixdrucker hingewiesen. So kann entsprechend
einem Matrixdrucker auch die Anzeige mit ihren Segmenten
ebenfalls in einen Matrix zerlegt werden. Durch eine zentrale
elektronische Steuerung kann man dann bei einem Terminal
oder einer Schreibmaschine komplette Zeichensätze als Tastenbeschriftung austauschen, die dann auch durch den Drucker
übernommen werden.

Es ist vorteilhaft, daß der Treiber als IC-Baustein (integrierten Schaltkreis enthaltender Baustein) ausgebildet ist.

Vorteilhaft bilden der Baustein und das Anzeigeelement unter
Zwischenschaltung einer Leiteplatte und elektrisch leitenden
Verbindungen eine Baueinheit.

Weiterhin ist es vorteilhaft, daß die Baueinheit an der Kappe
oder dem Sockel gehaltert ist.

Um einen einfachen Aufbau zu erhalten, ist die Anzeige auf
einem Sockel angeordnet und eine Kappe oder dergleichen bezüglich des Sockels bewegbar angeordnet. Die Kappe kann erfindungsgemäß mittels geeigneter Führungen bezüglich des Sockels verschiebbar sein oder aber auch um eine Achse schwenkbar angeordnet sein. Durch Betätigen der Kappe wird der elektrische Kontakt des Tasters in gewohnter Weise geschlossen

Es sei hier ausdrücklich hervorgehoben, daß die Anzeige im Rahmen dieser Erfindung auch direkt in der bewegbaren Kappe oder dergleichen angeordnet sein kann. Über geeignete Schleifkontakte oder sonstige elektrische Verbindungen, die die Bewegbarkeit der Kappe zulassen, erfolgt hierbei die Ansteuerung der Anzeige.

Weitere erfindungswesentliche Merkmale und Vorteile ergeben sich aus den nachfolgend anhand der Zeichnungen näher erläuterten Ausführungsbeispielen.

Es zeigen,

Fig. 1          schematisch einen Schnitt durch einen kombinierten Taster und mit einer verschiebbaren Kappe,

Fig. 2          schematisch einen Schnitt durch eine Ausführungsform mit schwenkbar angeordneter Kappe,

Fig. 3          schematisch einen Schnitt durch eine Taste gemäß einer weiteren Ausführungsform,

Fig. 4          schematisch eine weitere Ausgestaltung der Kappe,

Fig. 5          schematisch eine weitere Ausgestaltungsmöglichkeit der Kappe und

Fig. 6          ein Blockschaltbild einer Steuerelektronik.

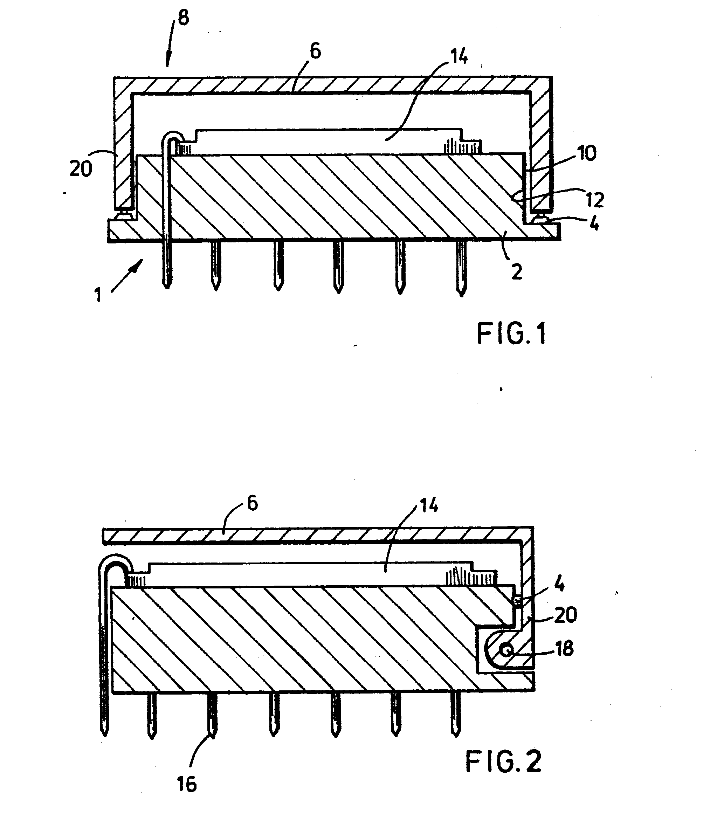

Figur 1 zeigt eine Taste 1 mit einem Sockel 2 und einem Schal
ter 4. Eine Kappe 6 ist bezüglich des Sockels 2 in Richtung
des Pfeiles 8 verschiebbar angeordnet. Zur Führung dienen
Seitenflächen 10 des Sockels in Verbindung mit zugeordneten
Innenflächen 12 der Kappe 6. Auf dem Sockel 2 ist ein Anzeige
element 14 angeordnet, das hier als Flüssigkristall-Anzeigeelement ausgebildet ist. Jedes Anzeigeelement 14 kann miteinander kombinierbare Segmente enthalten, mittels welchen das
vorgewählte Zeichen darstellbar ist. Zweckmäßig sind hierbei
die einzelnen Segmente durch den Benutzer einzeln ansteuerbar. Es ist ersichtlich, daß hierdurch ohne Schwierigkeiten
beliebige Zeichen ohne besonderen Aufwand zur Anzeige gebracht werden können. Ein Benutzer kann auch zahlreiche eigene Zeichen als zusätzliche Beschriftung einführen. Die Segmente können den jeweiligen Anforderungen entsprechend in
ihrer Größe, Formgebung, Anordnung usw. vorgegeben werden,
so daß je nach Ansteuerung die unterschiedlichsten Zeichen
zur Anzeige gebracht werden. Über Pins 16 erfolgt in gewohnter Weise die elektrische Ansteuerung des Anzeigeelementes 14
Die Kappe 6 besteht aus einem transparenten Kunststoff, so
daß das mittels des Anzeigeelementes 14 angezeigte Zeichen
ohne weiteres von einem Benutzer von oben her gesehen werden
kann. Die Kappe 6 ist topfförmig ausgebildet und schützt somit auch das eingeschlossene Anzeigeelement 14. Da bei dieser Ausführungsform der ansonsten bei Tastenschaltern übliche
zentrale Stift entfällt, ist hier ein bequemer Einbau des
Anzeigeelementes 14 ohne weiteres möglich. Ferner ergibt die
Führung der Kappe über die Innenflächen 12 eine sichere und
stabile Führung. Schließlich wird durch diese Bauform eine
vergleichsweise einfache Montage gewährleistet, da die drei
wesentlichen Bestandteile, nämlich Sockel 2, Anzeigeelement 14 und Kappe 6 nur übereinandergesteckt werden müssen.

Figur 2 zeigt eine Ausführungsform, bei welcher die Kappe 6 um ein Gelenk 18 schwenkbar bezüglich des Sockels 2 angeordnet ist. Der Schalter 4 befindet sich an der Seite des Sockels 2 und ist über den seitlichen Rand 20 der Kappe 6 betätigbar. Es versteht sich, daß auch bei dieser Ausführungs form die Kappe 6 aus einem transparenten Material besteht.

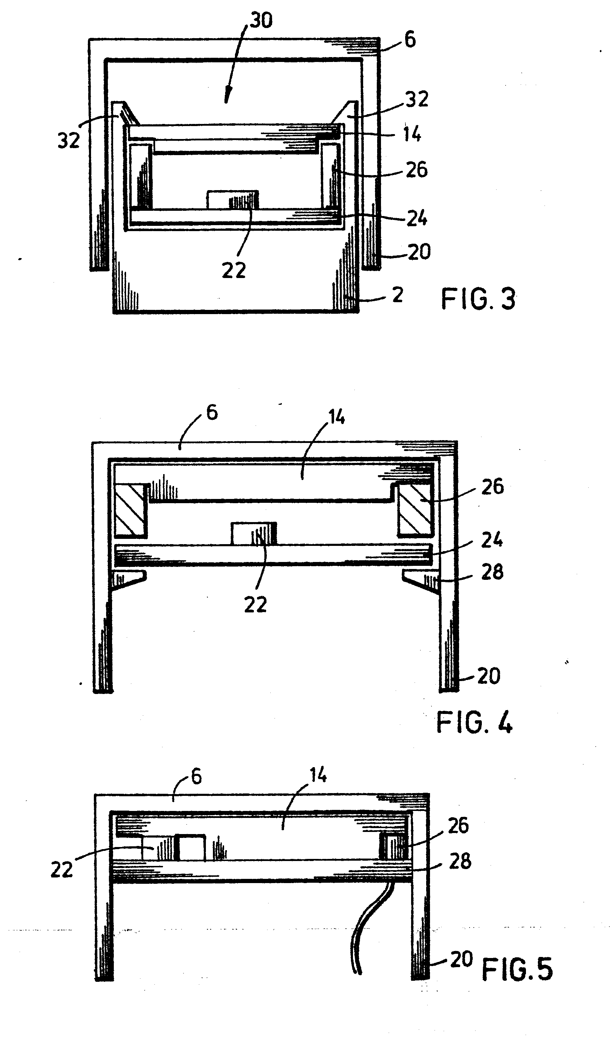

Die in Figur 3 dargestellte Ausführungsform ist insbesondere dann zweckmäßig, wenn ein LCD-Anzeigeelement 14 verwendet wird, wobei bei den notwendigen zahlreichen Anzeigesegmenten entsprechend viele Zuleitungen notwendig sind. Dies kann man dadurch erreichen, daß ein Steuer-IC, d.h. ein Baustein 22, der einen integrierten Schaltkreis enthält, in unmittelbarer Nähe des Anzeigeelementes 14 angeordnet ist, so daß nur noch die Spannungsversorgung und Datenübertragung benötigt wird. Bei der in Fig. 3 gezeigten Ausführungsform ist dieser Baustein 22 auf einer Leiterplatte 24 angeordnet, wobei seitlich Leitgummiteile 26 zu dem Anzeigeelement 14 vorgesehen sind. Diese Bauteile sind an dem Sockel 2 in einer U-förmigen Ausnehmung 30 an federnden Zungen 32 gehaltert. Über diesen Sockel 2 ist dann die Kappe 6 angeordnet.

Bei der weiteren Ausführungsform gemäß Fig. 4 befinden sich diese Bauteile in der Kappe 6, wobei als Halterung Vorsprünge 28 vorgesehen sind, auf denen die Leiterplatte 24 mit dem Baustein 22 aufsitzt. Seitlich sind wiederum die Leitgummiteile 26 angeordnet, die an dem Anzeigeelement 14 anliegen. Dieses Bauteil kann dann auf einen handelsüblichen Sockel 2 aufgesetzt werden.

Schließlich zeigt die weitere Ausführungsform gemäß Fig. 5 die unmittelbare Anordnung des Bausteins 22 an der Glasplatte des LCD-Anzeigeelementes 14, wobei diese beiden Bauteile an einer Halterung 28 abgestützt sind. Auch diese Ausbildung der Kappe kann auf einen herkömmlichen Sockel 2 aufgesetzt werden. Anstelle der erwähnten Leitgummielemente 26
können auch andere aus elektrischleitendem Material bestehende
Elemente eingesetzt werden.

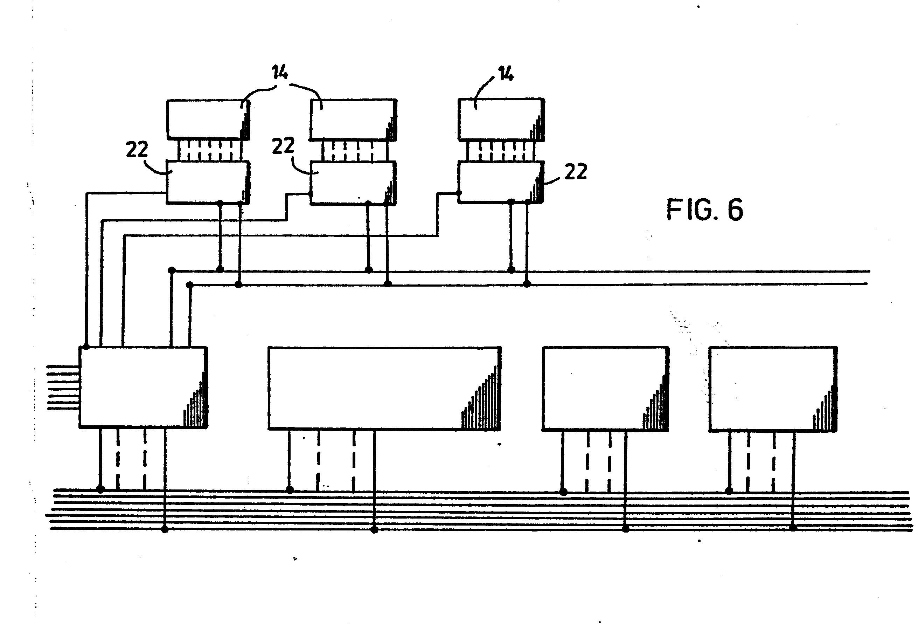

Zur Ansteuerung der Anzeigeelemente 14 kann eine Steuerelektronik
vorgesehen werden, wie sie in Fig. 6 in Form eines Blockschaltbildes dargestellt ist. Da jede Anzeige aus einer größeren
Anzahl von einzelnen Segmenten besteht, muß eine große Gesamtzahl von Anzeigesegmenten kontrolliert werden. Nimmt man zum
Beispiel für eine Anzeige eine 8 x 12 Punktmatrix und 70 Anzeigen,
so ergibt dies 6720 Anzeigesegmente, d.h. eine große Anzahl von
Segmenten. Aus diesem Grund wird eine dezentrale Steuerung vorgeschlagen, bei der jede Anzeige eine eigene Steuerung erhält.
Diese Steuerung wird durch einen integrierten Schaltkreis übernommen, der lediglich nur einmal die Information über das enzuzeigende Symbol erhalten muß und dann selbständig dieses darstellt. Diese Informationen über die gesamten Zeichen können in
einem zentralen elektronischen Bauelement (ROM) enthalten sein,
oder von außen eingelesen werden. Dieses dezentrale Konzept führt
zu einer Kombination von Steuer-IC, Anzeige und Tastenschalter.

In dem Blockschaltbild gemäß Figur 6 sind die Baugruppe des
LCD-Anzeigeelementes 14 und Treiber (Steuer-IC 22) in die
Tastenkappe eingebaut. Über die Ein- und Ausgabe (I/O) erhalten
die Steuer-IC 22 ihre Informationen und steuern dann das LCD-
Anzeigeelement 14 an. Der Vorteil liegt hierbei in der geringen
Anzahl der Leitungen zum Treiber, während zwischen Treiber und
LCD 28 Verbindungen bestehen, sind es für den Treiber 3 Daten -
und 2 Spannungsversorgungsleitungen.

Patentansprüche

1) Vorrichtung, insbesondere für Schreibmaschinen und Terminals mit einem Tastenfeld, wobei jede Taste mit wenigstens zwei, wahlweise vorwählbaren Zeichen belegt ist und jeder Taste ein ansteuerbares Anzeigeelement zugeordnet ist, das sich nahe der zugehörigen Taste befindet oder in diese integriert ist, dadurch gekennzeichnet, daß zum Ansteuern der Anzeigeelemente (14) in Form von Flüssigkristall (LCD) einer Taste eine dezentrale Steuerung vorgesehen ist, bei der jedes Anzeigeelement (14) mit einem Steuerelement in Form eines Treibers (22) versehen ist.

2) Vorrichtung nach Anspruch 1, dadurch gekennzeichnet, daß der Treiber (22) zur Darstellung des anzuzeigenden Symbols im Anzeigeelement (14), nur einmal mit der Information versehen wird und selbständig weiterarbeitet.

3) Vorrichtung nach Anspruch 1 und 2, dadurch gekennzeichnet, daß der Treiber (22) als IC-Baustein (integrierten Schaltkreis enthaltender Baustein) ausgebildet ist.

4) Vorrichtung nach Anspruch 1 bis 3, dadurch gekennzeichnet, daß der Baustein (22) und das Anzeigeelement (14) in der Taste angeordnet sind.

5) Vorrichtung nach Anspruch 1 bis 4, dadurch gekennzeichnet, daß eine zumindest teilweise durchscheinende oder transparente Kappe (6) das Anzeigeelement (14) abdeckt, wobei das Anzeigeelement (14) auf einem Sockel (2) angeordnet ist und die Kappe (6) oder dergleichen bezüglich des Sockels bewegbar angeordnet ist.

6) Vorrichtung nach Anspruch 1 bis 5, dadurch gekennzeichnet, daß der Baustein (22) und das Anzeigeelement (14) unter Zwischenschaltung einer Leiterplatte (24) und elektrisch leitenden Verbindungen (26) eine Baueinheit bilden.

7) Vorrichtung nach Anspruch 6, dadurch gekennzeichnet, daß die Baueinheit (14,22,24,26) an der Kappe (6) oder dem Sockel (2) gehaltert ist.

8) Vorrichtung nach einem der Ansprüche 1 bis 7, dadurch gekennzeichnet, daß die Bewegung der Kappe (6) zur Auslösung eines Schalters (4) über einen Rand (20) der Kappe (6) übertragbar ist.

FIG.1

FIG.2

0149086

FIG. 3

FIG. 4

FIG.5

FIG. 6